# EUROPEAN PATENT SPECIFICATION

(11) **EP 2 338 696 B1**
(45) Date of publication and mention of the grant of the patent: **15.04.2015**
(21) Application number: 10445010.1
(22) Date of filing: 19.12.2010
(51) Int. Cl.: B60B 29/00

(54) **Wheel lift**
Radheber
Levage de roue

(30) Priority: 22.12.2009 SE 0901598
(43) Date of publication of application: 29.06.2011
(73) Proprietor: Askling, Lars, 590 30 Borensberg (SE)
(72) Inventor: Askling, Lars, 590 30 Borensberg (SE)
(74) Representative: Berglund, Erik Wilhelm

(56) References cited:
- WO-A1-96/05075
- US-A- 5 505 578
- US-A1- 2008 101 898
- US-B1- 7 097 406

## Description

In order to facilitate the lifting of wheels in connection with mounting and demounting of wheels on in particular tractors and other working machines wheel lifts are known where a wheel is lifted with a U-shaped frame. On the lateral parts of the frame one or several rollers are arranged essentially in parallel with the lateral parts of the frame and allowing rotation of a lifted wheel in order to achieve compliance for the bolt holes of the shaft end and the wheel. The lifting movement can for instance be achieved with a fork truck like substructure lifting the U-shaped part.

A known wheel lift is disclosed in the closest prior art document US 2008 0101898 A.

In another known wheel lift (SE8800958-4) the central part of the U-shaped frame is variable to its length. At use the lateral parts of the frame are displaced from each other sufficiently to allow the wheel lift to be placed with one lateral part in front of and one behind the wheel (seen in the rolling direction of the wheel) and the central part essentially in parallel with the wheel. In this position the lateral parts of the frame are pushed (or drawn) towards each other causing the rollers to push the wheels upwards, either to take the load when the wheel is unfastened or to lift the wheel to the appropriate height.

For movement of the wheel lift with as well as without tractor wheel supporting wheels or rollers are arranged at the central part and the outer ends of the lateral parts respectively.

The above described wheel lift with a central part of the U-shaped frame that is variable to its length, for lifting and lowering of wheels is reliable, easy to handle and time saving. However tractor wheels and machine wheels have become wider and the widest wheels may even end up so far out that the balance gets poor, in particular if the center of the wheel, in a lateral direction for this end up close to or even outside of the supporting rollers or wheels.

The object of the invention is to eliminate the above problem. This is achieved with a wheel lift with a U-shaped frame where, for lifting of tractor or machine wheels that are to be mounted or demounted, the U-shaped frame on the lateral parts of the frame has one or several rollers, essentially parallel with the lateral parts of the frame and permitting rotation of a lifted wheel, characterized in that the lateral parts of the frame each comprise two or more parts, one fastened in the central part of the frame and one or several in relation to this lengthwise, for instance telescopic, displaceable part or parts so that the lateral parts become variable to their length, and that the rollers are arranged on one of the displaceable parts in each lateral part.

In an advantageous further development the rollers that the handled wheel rest on are arranged on moveable extendable parts of the lateral parts so that the movement of the rollers only have to correspond to half the difference in width of the wheels in order to support the lifted wheel as centered as possible.

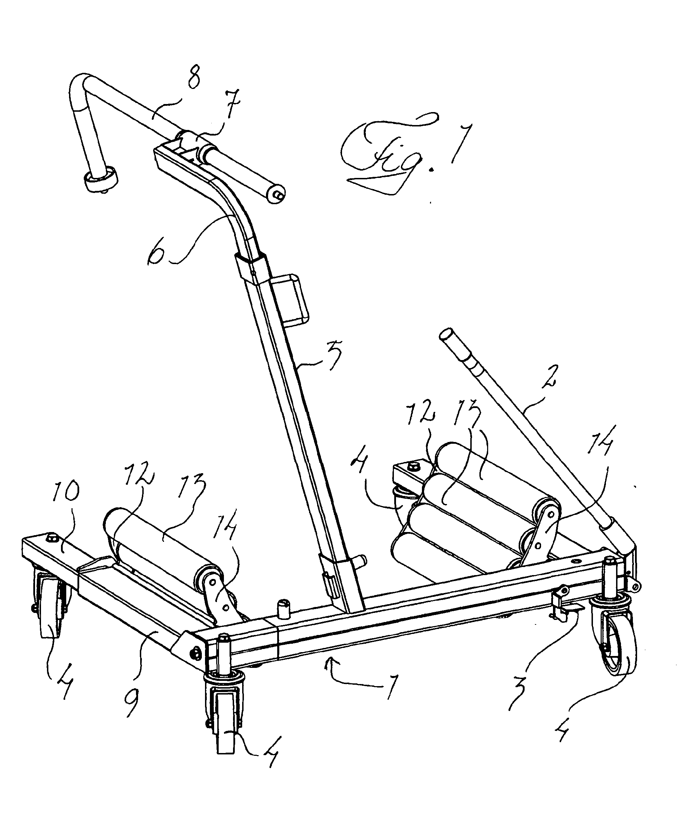

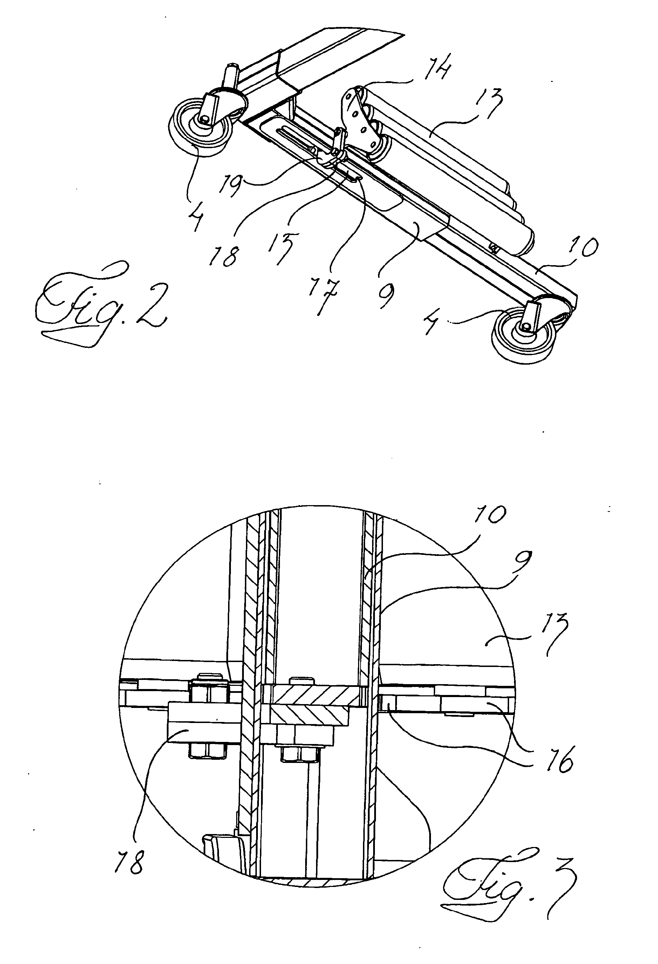

Further characteristics and advantages of the invention are apparent from the claims and the following description of a preferred and on the enclosed drawings shown embodiment. In the drawings Fig. 1 depicts the wheel lift in its entirety, in perspective, Fig. 2 a part view from below of a lateral part of the frame in a half extended position, and fig. 3 a detail of the embodiment.

The wheel lift shown in the drawings is a further development of that described in the above Swedish patent and include a U-shaped frame where the central part 1 is hydraulically variable to its length. The not shown hydraulics include a pump arm 2 and a pedal 3 by means of which is controlled if the central part is to be extended or shortened at the pumping with the arm. In order to provide a stable standing for tractor wheels or other that are to b lifted a post 5 is fastened to the central part, in the upper end of said post a structural tubing 6 with a right angled bend is displaceable and possible to lock as to its height. The upper leg of the bent structural tubing extend out over the wheels that are lifted by the wheel lift and include a brace 7, in which a variably extending round and in a right angle bent structural tubing 8 can be fixed. The bent structural tubing 8 may be turned, displaced and locked in the brace 7 so that the post 5, the structural tubings 6, 8 and the brace 7 together form a hook that can prevent the wheel that is lifted or clamped between the legs of the wheel lift from tipping, and where the outer part of the hook can be swiveled away when the wheel lift is to be brought in position for lifting up or putting down a tractor wheel.

The lateral parts or legs of the U-shaped frame are telescopic, each with a rectangular larger structural tubing 9 fastened in the central part 1 and a smaller displaceable rectangular structural tubing 10 that in the outer end is provided with a pivot wheel 4. Pivot wheels are also arranged in the ends of the central part 1. On the inside of each lateral part of the frame roller holders are journaled for four rollers 13 in common plane, the rollers are parallel with the lateral parts of the frame. A first roller holder 14 is journaled in a first bracket 18, 19 that from the inner end of the smaller structural tubing 10 hooklike extends out through a longitudinal slot 15 in the downwards facing wall of the larger structural tubing 9. In the other end of the rollers a second roller holder 12 is journaled in a bracket 11 on the smaller and displaceable structural tubing 10 approximately where the larger structural tubing ends at maximally inserted smaller structural tubing 10. The roller holders 12 and 14 are restrictedly pivotable to allow adaption to different wheel diameters and contact positions against the tractor wheels.

Since the rollers and their roller holders are located on the inner side of the lateral parts the gravity pivot these downwards when no wheel is supported between the rollers and the roller holder that is journaled closest to the central part is provided with a protrusion 16 that constitutes a stop for the downwards pivoting movement so that the roller plane and the smaller structural tubing are locked relative the larger structural tubing in the absence of a tractor wheel. By slightly lifting the roller plane the smaller structural tubing 10 can be displaced relative the larger structural tubing 9 in a telescopic movement. When the roller plane is let down again the position is fixed.

When a wheel is lifted the roller plane will be tilted up somewhat so that the contact between the protrusion and the larger structural tubing cease. The relative position of the telescopic parts is however secured by the weight of the wheel via the rollers and the holders of these acting eccentrically on the smaller structural tubing, resulting in this turning in relation to the larger structural tubing providing a friction locking. This turning can also be obtained with other locations of the journalling points of the roller holders as long as a line from the center of the lifted wheel through the journal point of the roller holder does not pass through the center of the moveable structural tubing or its turning axle. The friction locking can be enhanced by placing the pivot wheels 4 in the outer ends of the smaller structural tubings displaced eccentrically towards the outsides of the lateral parts.

In order to minimize the width of the slot 15 in the bottom of the larger structural tubings of the lateral parts the hook parts may comprise two parts 18, 19 and the fixing in the inner end of the smaller structural tubing can be obtained with a pin and a bolt, the latter one being possible to reach through the slot. The slot extends only the distance that the hook is moved and hook and slot thus acts as a movement stop and prevents the smaller structural tubing 10 from being drawn out of the larger one when the hook is mounted. The protrusions 17 in the ends of the slot prevents the hook from being wedged in the end positions and the risk of damages to the walls of the slot repectively. Since the rollers advantageously are located centrally in relation to the tractor wheel that is to be lifted the respective telescope movement of the lateral parts only have to correspond to half the difference between the width of the rollers and the widest wheel in order to centrally support the lifted wheel. The widest wheel will thus extend beyond the rollers and for the sake of stability therefore the smaller structural tubings of the lateral parts extend a distance out past the rollers so that the carrying or supporting wheels are located further out. When the rollers are displaced outwards also the support points of the supporting wheels in the outer ends of the lateral parts are displaced outwards.

Instead of fastening the larger structural tubings to the central part of the frame the smaller structural tubings may be fastened to the central part , at which the bracket for the journaling of the rollers are arranged on the larger and outer structural tubing. It is also possible to consider the lateral parts being constituted of more than 2 parts, for instance to give the supporting wheels a larger movement than the rollers out from the central part.

The lateral parts, changeable to their length has not only the advantage of enabling an adaption to differently wide wheels but allow also the lift to be made more narrow at transport and stowing away.

## Claims

1. Wheel lift with a U-shaped frame where, for lifting of tractor or machine wheels that are to be mounted or demounted, the U-shaped frame on the lateral parts of the frame has one or several rollers (13), essentially parallel with the lateral parts of the frame and permitting rotation of a lifted wheel, **characterized in that** the lateral parts of the frame each comprise two or more parts, one (9) fastened in the central part (1) of the frame and one or several in relation to this lengthwise, for instance telescopic, displaceable part (20) or parts so that the lateral parts become variable to their length, and that the rollers (13) are arranged on one of the displaceable parts in each lateral part.

2. Wheel lift according to claim 1 or 2, **characterized in that** supporting wheels (4) are arranged in the moveable part of respective lateral part (9) that is furthest from the central part (1) and in this part in the end that is furthest from the central part.

3. Wheel lift according to claim 1, **characterized in** the lateral frame parts including two or several parts, the movements of the parts at a changing of length being coupled so that the supporting wheels (4) when the lateral frame parts are extended are displaced the same distance as the rollers (13) or more.

4. Wheel lift according to claim 2, **characterized in that** the lateral frame parts comprise a large pipe (9) fastened to the central part (1) of the frame and with a lengthwise extending slot (15), through which slot a first bearing bracket (18, 19) extends, that is fastened to a smaller, in the larger pipe displaceable, pipe(10) in which a first bearing bracket or a roller holder (14) for a group of rollers (13) is journalled and that the roller or a second roller holder is further jornalled and that the rolleror a second roller is further journalled in a bearing bracket (12) arranged on the smaller pipe (10) outside of the end of the larger pipe (9) in the end facing away from the central part (1) of the frame.

5. Wheel lift according to claim 4, **characterized in that** on in the first bearing bracket journaled roller holder for one or a group of rollers include a stop shoulder (16) that at unloaded rollers (13) by the weight of these and the roller holders (12, 14) weight is pressed against the outside of the larger pipe (9) for fixing of the lengthwise position of the smaller pipe (10).

6. Wheel lift according to any of the preceding claims, **characterized in that** the journaling of a roller or a group of rollers (13) is located so that a radius from center of the lifted wheel through the journal point of the roller or group of rollers does not intersect the center of the telescopic lateral parts (9, 10), but rather pass a distance from the center of this, so that when loaded with a wheel a turning movement or force is exerted on the displaceable pipe (12) so that this is locked relative the fixed pipe (14).

7. Wheel lift according to any of the preceding claims, **characterized in that** wheels (4) in the outer ends of the lateral parts of the frame are eccentrically therein providing a turning torque for the moveable pipe (10) in relation to the fixed one.

8. Wheel lift according to any of the claims 3-6 **characterized in that** the length slot (15) in the larger pipe (9) define the available extension.

9. Wheel lift according to claim 4, **characterized in that** the first bearing bracket (14) comprise two plates (18, 19) so that the slot (15) does not have to be broader than the diagonal of the of a plate where it extends in through the slot.

10. Wheel lift according to any of the claims 5 - 10 **characterized in that** the slot (15) for the first bearing bracket is arranged on the bottom side of the fixed larger tubing (9) and that the bearing bracket has the shape of a hook comprising two different plates, the one (18) closest to the end of the smaller tubing (10) extends into the larger tubing (9) and over an essential part of the cross section of the smaller structural tubing(10), but ends where the hook in the outer end begin to extend upwards, whereas the second plate (19) continues with the outer end of the hook and inwards to the thinner structural tubing (10) only extends a short distance into the larger structural tubing (10), in this way the first plate can be turned in place and the second plate can be pushed in, then they can be joined by two bolts.

## Patentansprüche

1. Radheber mit einem U-förmigen Rahmen, bei dem zum Heben von Schlepper- oder Maschinenrädern, welche zu montieren oder zu demontieren sind, der U-förmige Rahmen an den Querteilen des Rahmens ein oder mehrere Rollen (13) hat, die im wesentlichen parallel zu den Querteilen des Rahmens angeordnet sind und ein Drehen eines angehobenen Rades gestatten, **dadurch gekennzeichnet, dass** die Querteile des Rahmens jeweils zwei oder mehr Teile aufweisen, wobei ein Teil (9) am Mittelteil des Rahmens fest angebracht ist und ein oder mehrere in Längsrichtung, beispielsweise teleskopartig verschiebbare Teile (10) derart vorgesehen sind, dass die Querteile in ihrer Länge variabel sind, und dass die Rollen (13) auf einem der verschiebbaren Teile des Querteils angeordnet sind.

2. Radheber nach Anspruch 1, **dadurch gekennzeichnet, dass** Tragräder (4) in dem beweglichen Teil des jeweiligen Querteils angebracht sind, welches am weitesten weg von dem Mittelteil (1) liegt, und teilweise an dem Ende vorgesehen ist, welches von dem Mittelteil am weitesten entfernt ist.

3. Radheber nach Anspruch 1, **dadurch gekennzeichnet, dass** die Querrahmenteile drei oder mehrere Teile umfassen, die Bewegungen der Teile zur Längenänderung derart gekoppelt sind, dass die Tragräder (4) um den gleichen Abstand wie die Rollen (13) oder mehr verschoben sind, wenn die Querrahmenteile ausgefahren sind.

4. Radheber nach Anspruch 2 **dadurch gekennzeichnet, dass** die Querrahmenteile ein großes Rohrteil (9) aufweisen, welches fest mit dem Mittelteil (1) des Rahmens verbunden ist und einen in Längsrichtung verbundenen Schlitz /15) hat, wobei durch diesen Schlitz ein erster Lagerbock (18, 19) verläuft, welcher fest mit einem kleinere in dem großen Rohrteil verschiebbaren Rohrteil (10) verbunden ist, in welchem ein Lagerbock oder ein Rollenhalter (14) für eine Gruppe von Rollen (13) gelagert ist, und dass die Rollen oder ein zweiter Rollenhalter weiterhin gelagert ist und dass die Rollen oder ein zweiter Rollenhalter in einem weiteren Lagerbock (12) gelagert ist, welcher an dem kleineren Rohrteil (10) außerhalb des Endes des größeren Rohrteils (9) an dem Ende angeordnet ist, welche vom Mittelteil (1) des Rahmens weg weist.

5. Radheber nach Anspruch 4, **dadurch gekennzeichnet**, das an oder in dem ersten Lagerbock, welcher den Rollenhalter oder eine Gruppe von Rollen lagert, eine Anschlagschulter (16) vorgesehen ist, welche bei unbelasteten Rollen (13) durch das Gewicht von denselben und durch das Gewicht der Rollenhalter (12, 14) gegen die Außenseite des größeren Rohrteils (9) zum Fixieren der Längsposition des kleineren Rohrteils (10) gedrückt wird.

6. Radheber nach einem der vorangehenden Ansprüche, **dadurch gekennzeichnet, dass** die Lagerung einer Rolle oder einer Gruppe von Rollen (13) derart ausgelegt ist, dass ein Radius von dem Mittelpunkt des angehobenen Rades durch die Lagerstelle der Rolle oder der Gruppe von Rollen im Mittelteil der teleskopartigen Teile (9, 10) nicht schneidet, sondern beabstandet von dem Mittelpunkt hiervon durchgeht, so dass dann, wenn eine Raddrehbewegung oder eine Kraft auf das verschiebbare Rohrteil (12) einwirkt, dieses hierdurch relativ zu dem festen Rohrteil (14) gesperrt wird.

7. Radheber nach einem der vorangehenden Ansprüche, **dadurch gekennzeichnet, dass** die Räder (4) an den äußeren Enden der Querteile des Rahmens exzentrisch darin vorgesehen sind, um ein Drehmoment für das bewegliche Rohrteil in Relation zu dem festen Rohrteil bereit zu stellen.

8. Radheber nach einem der Ansprüche 3 bis 6, **dadurch gekennzeichnet, dass** der Längsschlitz (15) in dem größeren Rohrteil (9) die verfügbare Verlängerung bestimmt.

9. Radheber nach Anspruch 4, **dadurch gekennzeichnet, dass** der erste Lagerbock (14) zwei Platten (18, 19) aufweist, so dass der Schlitz (15) nicht breiter als die Diagonale der Platte zu sein braucht, die sich durch den Schlitz erstreckt.

10. Radheber nach einem der Ansprüche 5 bis 9, **dadurch gekennzeichnet, dass** der Schlitz (15) für den ersten Lagerbock an der Bodenseite des festen größeren Rohrteils (9) angeordnet ist, und dass der Lagerbock die Form eines Hakens hat, welcher zwei unterschiedliche Platten aufweist, wobei die eine Platte (18), die dem Ende des kleineren Rohrteils (10) am nächsten liegt, sich in das größere Rohrteil (9) über einen Großteil des Querschnitts des kleineren Rohrteils (10) erstreckt, aber dort endet, wo der Haken am äußeren Ende sich nach oben zu erstrecken beginnt, während die zweite Platte sich zu dem äußeren Ende des Hakens fortsetzt und nach innen zu dem dünnere Rohrteil (10) nur um einen kleinen Abstand in das größere Rohrteil (10) erstreckt, wobei die erste Platte an Ort und Stelle gedreht werden kann und die zweite Platte nach innen gedrückt werden kann, und dann diese Teile mit zwei Schrauben verbunden werden können.

## Revendications

1. Lève-roues doté d'un châssis en U où, pour lever des roues de tracteur ou de machine qui doivent être montées ou démontées, le châssis en U sur les parties latérales du châssis comporte un ou plusieurs rouleaux (13), essentiellement parallèles aux parties latérales du châssis et permettant une rotation d'une roue levée, **caractérisé en ce que** les parties latérales du châssis comprennent chacune deux parties ou plus, l'une (9) fixée dans la partie centrale (1) du châssis et une ou plusieurs par rapport à celui-ci dans le sens de la longueur, par exemple une ou des parties télescopiques déplaçables (10) de sorte que les parties latérales deviennent variables en longueur, et que les rouleaux (13) soient agencés sur l'une des parties déplaçables dans chaque partie latérale.

2. Lève-roues selon la revendication 1 ou 2, **caractérisé en ce que** des roues de support (4) sont agencées dans la partie mobile de la partie latérale (9) respective qui est la plus éloignée de la partie centrale (1) et dans cette partie dans l'extrémité qui est la plus éloignée de la partie centrale.

3. Lève-roues selon la revendication 1, **caractérisé en ce que** dans les parties latérales de châssis comprenant deux ou plusieurs parties, les mouvements des parties à un changement de longueur étant couplés de sorte que les roues de support (4) lorsque les parties latérales de châssis sont étendues soient déplacées de la même distance que les rouleaux (13) ou plus.

4. Lève-roues selon la revendication 2, **caractérisé en ce que** les parties latérales de châssis comprennent un grand tuyau (9) fixé à la partie centrale (1) du châssis et avec une fente s'étendant dans le sens de longueur (15), à travers laquelle fente s'étend un premier support de palier (18, 19) dans le plus grand tuyau déplaçable, support qui est fixé à un plus petit tuyau (10) dans lequel un premier support de palier ou un porte-rouleaux (14) pour un groupe de rouleaux (13) est tourillonné et **en ce que** le rouleau ou un second porte-rouleaux est en outre tourillonné, et **en ce que** le rouleau ou un second rouleau est en outre tourillonné dans un support de palier (12) agencé sur le tuyau plus petit (10) à l'extérieur de l'extrémité du tuyau plus grand (9) dans l'extrémité orientée à l'opposé de la partie centrale (1) du châssis.

5. Lève-roues selon la revendication 4, **caractérisé en ce que** dans le premier support de palier tourillonné un porte-rouleaux pour un ou un groupe de rouleaux comprend un épaulement d'arrêt (16) qui, au niveau de rouleaux déchargés (13) par le poids de ceux-ci et le poids des porte-rouleaux (12, 14), est appuyé contre l'extérieur du tuyau plus grand (9) pour la fixation dans le sens de la longueur du tuyau plus petit (10).

6. Lève-roues selon l'une quelconque des revendications précédentes, **caractérisé en ce que** le tourillonnage d'un rouleau ou d'un groupe de rouleaux (13) est situé de sorte qu'un rayon depuis un centre de la roue levée à travers le point de tourillon du rouleau ou groupe de rouleaux ne croise pas le centre des parties latérales télescopiques (9, 10), mais plutôt passe à distance du centre de celles-ci, de sorte que lorsqu'il est chargé avec une roue, un mouvement ou une force de rotation est exercé sur le tuyau déplaçable (12) de sorte que celui-ci soit bloqué par rapport au tuyau fixe (14).

7. Lève-roues selon l'une quelconque des revendications précédentes, **caractérisé en ce que** des roues (4) dans les extrémités extérieures des parties latérales du châssis sont excentriques, conférant un couple de rotation pour le tuyau mobile (10) par rapport au tuyau fixe.

8. Lève-roues selon l'une quelconque des revendications 3 à 6, **caractérisé en ce que** la fente de longueur (15) dans le tuyau plus grand (9) définit l'extension disponible.

9. Lève-roues selon la revendication 4, **caractérisé en ce que** le premier support de palier (14) comprend deux plaques (18, 19) de sorte que la fente (15) ne doive pas être plus large que la diagonale d'une plaque où il s'étend à travers la fente.

10. Lève-roues selon l'une quelconque des revendications 5 à 10, **caractérisé en ce que** la fente (15) pour le premier support de palier est agencée sur le côté de fond du tube fixe plus grand (9) et **en ce que** le support de palier a la forme d'un crochet comprenant deux plaques différentes, l'une (18) la plus proche de l'extrémité du tube plus petit (10) s'étend dans le tube plus grand (9) et sur une partie principale de la coupe du tube structurel plus petit (10), mais se termine là où le crochet dans l'extrémité extérieure commence à s'étendre vers le haut, tandis que la seconde plaque (19) se poursuit avec l'extrémité extérieure du crochet et vers l'intérieur du tube structurel plus fin (10) ne s'étend que d'une courte distance dans le tube structurel plus grand (10), de cette façon la première plaque peut être tournée pour être mise en place et la seconde plaque peut être poussée, puis elles peuvent être assemblées par deux boulons.
